# EUROPEAN PATENT APPLICATION

(11) **EP 2 832 273 A1**
(43) Date of publication of application: **04.02.2015**
(21) Application number: 13380031.8
(22) Date of filing: 02.08.2013
(51) Int. Cl.: A47J 43/046, A47J 43/07, A47J 27/04

(54) **Device for food preparation including steaming and steaming vessel**

(71) Applicant: Compania Espanola de Electromenaje, SA, 25790 Oliana (Lleida) (ES)
(72) Inventor: Trench Roca, Lluís, 08650 Sallent (Barcelona) (ES); Alet Vidal, Josep, 25790 Oliana (Lleida) (ES); Montraveta Montraveta, Fidel, 25790 Oliana (Lleida) (ES)
(74) Representative: Juncosa Miro, Jaime

(57) **Abstract**

The invention includes a steam cooking container (10) that can be coupled on top of a container, the cooking container (10) having holes (14) for the passage of steam and an upper access opening (6). Said container (10) comprises an opening (20) for the entry of steam and a support (13) for holding foods located above said opening (20), demarcating a cavity (A) for receiving foods and said support (13) having holes (14) for the passage of steam to said cavity (A). A section of the steam cooking container (10) is arranged below the opening (20) forming a cavity (B) for condensate retention, demarcated by walls and a bottom. In the cooking position, the holes (14) of the support (13) for holding foods and said opening (20) are not superimposed on, or not coinciding or not aligned with one another.

## Description

### Technical Field

In a first aspect, the present invention relates to a device for preparing foods, such as a cooking machine, including steam cooking.

The invention also proposes a steam cooking container intended for foods, particularly vegetables and fish, envisaged for being associated with the mentioned device for preparing foods.

### Background of the Invention

All forms of conventional cooking cause changes in the structure, quality and amount of nutritive elements in foods. Steam cooking foods allows fully maintaining their nutritive values, their entire flavor and a compact and tasty consistency. Likewise, garden produce, for example, are even tastier than if they are cooked using another method. The same can be said for fish, an ideal delicacy to be steam cooked.

Devices for processing and preparing foods comprising driving means for rotating cutting or stirring blades inside a container containing the foods to be processed and heat energy transfer means for heating the foods in the container are known on the market. Patent FR 2 326 171 shows an example of such devices.

On the other hand, the company Vorwerk, owner of patent FR 2 326 171, has been marketing since the 1980's a device called "Thermomix-3300", which internally includes a bowl with a perforated bottom and wall, said bottom being spaced from said blades and being envisaged for steam cooking foods arranged therein.

Document EP 1731068 discloses a cooking mixer for processing and preparing foods in a container with cutting blades for cutting foods, induction heating means and weighing means, wherein the weight of the induction heating device is excluded from weighing, and it describes in Figures 13, 14 and 15 a basket comprising a perforated bottom and walls for steam cooking foods inside the mixer. Figure 19 describes a steam cooking tray comprising a perforated bottom envisaged for being coupled directly to the mouth of the container for providing steam cooking compartments additional or complementary to the mentioned basket.

Document EP 0757530 describes a kitchen appliance with the features of patent FR 2 326 171, wherein a container for stirring and heating foods is covered with a lid having a central opening, the arrangement of a container having a perforated bottom on said lid having been envisaged for preparing foods by steaming, with the re-introduction of the condensed steam and moisture resulting from steam cooking towards the stirring container through that opening.

Steam cooking in said baskets, containers or trays described in all the aforementioned background documents has the drawback that said condensation or moisture resulting from steam cooking foods along with their substances or acquired flavors will always be mixed in the return thereof with the fluid contained in the base container with which they are associated (inside or outside the container). Said fluid, which could be pure water or a liquid, is modified by introducing the mentioned condensate or moisture, providing a mixture that may be inappropriate, particularly if that water or liquid is to be used again for another cooking operation to which a specific aroma and flavor will inevitably be transferred.

### Brief Description of the Invention

The object of the present invention prevents the mentioned drawback. In fact, the invention provides a device for preparing foods such as a cooking mixer having a known structure, in which the association of a steam cooking container, which includes a compartment prepared for receiving, retaining and recovering the condensates and moisture resulting from cooking, has been envisaged.

According to the structure disclosed in the indicated background documents, the device for preparing foods comprises: a container with stirring or mixing blades or vanes for stirring or mixing foods, heating means for heating said stirring/mixing container and a base structure or casing to which said container is coupled and which houses driving means for driving said blades or vanes, the mentioned heating means and which generally provides an interface for the user to control the device. The device includes a steam cooking container which can be coupled to a mouth of said stirring/mixing container.

According to the present invention, the mentioned steam cooking container has means for being coupled in a secure and leak-tight manner to the mentioned mouth and comprises:
- at least one opening for the entry of steam and a support for holding the foods to be steam cooked which is superimposed on said opening for the entry of steam, demarcating above said support a first cavity for receiving foods and said support having holes for the free passage of steam into said first cavity;
- a lower section or compartment of the steam cooking container below the mentioned opening for the entry of steam, forming a second cavity intended for retaining the condensates and moisture resulting from steam cooking which enter said cavity through said holes, said second cavity being demarcated by walls integral with a bottom such that when the device is in a cooking position, the holes of the mentioned support for holding foods and said opening for the entry of steam are not superimposed on, or not coinciding or not aligned with one another.

According to one embodiment of the invention, the support for holding foods is removable and for that purpose has a configuration for the complementary coupling to a manipulation handle.

In a preferred embodiment, said opening for the entry of steam is one in number and is located in a central area of said second cavity for condensate retention.

The mentioned steam cooking container can be a one-piece container or formed by two parts that can be coupled to one another, one of them providing the mentioned second cavity.

These and other advantageous features will be inferred from the following description.

### Brief Description of the Drawings

In order to facilitate understanding of the following explanation, several sheets of drawings are attached by way of non-limiting example, in which:
Figure 1 shows a general elevational cross-section view of a container for preparing foods according to the state of the art (equipped with vanes or blades and prepared for being associated with driving means for driving said vanes or blades and with heating means), including an inner basket for steam cooking foods;
Figure 2 is a general elevational cross-section view of the present device for preparing foods including a steam cooking container coupled directly to the mouth of the container for preparing foods;

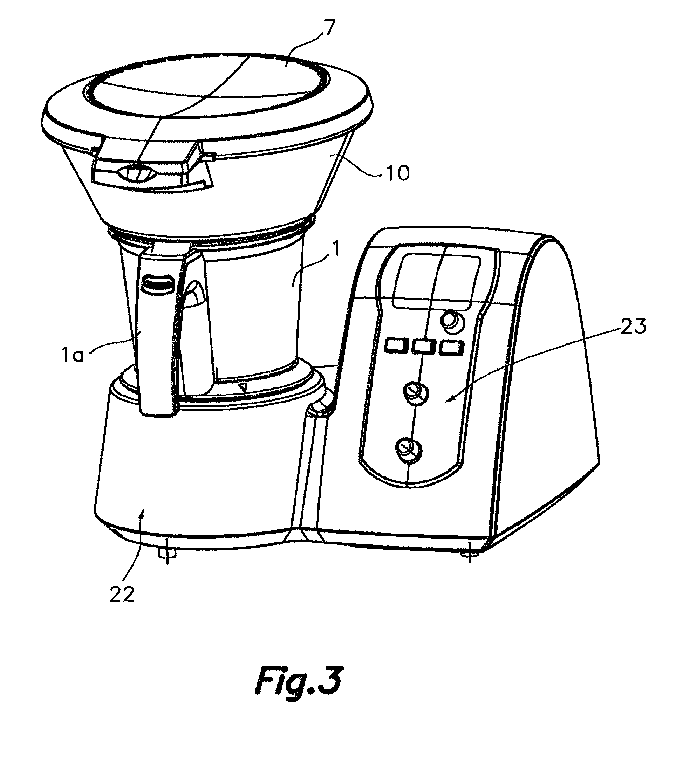

Figure 3 depicts an outer perspective view of the present device installed in a base casing with an interface for a user to control the operation;
Figure 4 is an exploded perspective view showing each and every part of the same device of this invention;

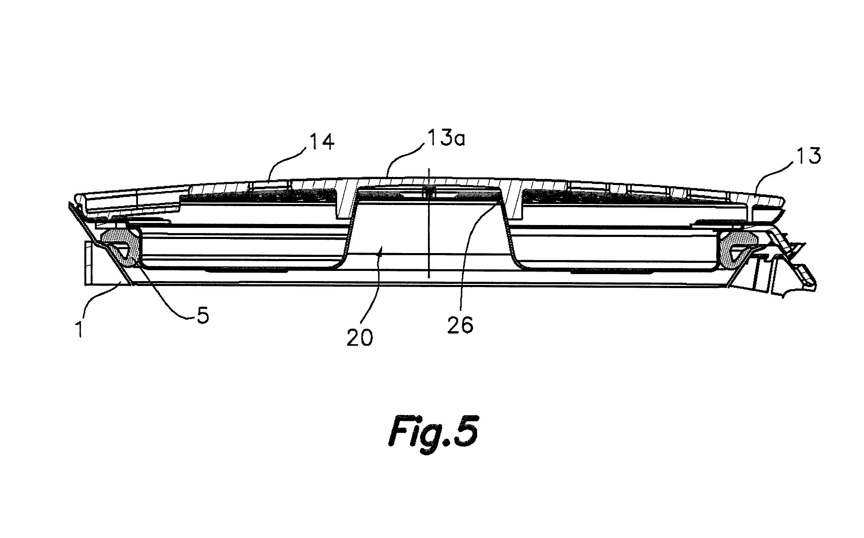

Figure 5 is an elevational section view of the support for holding foods demarcating the two cavities of the proposed steam cooking container;
Figure 6 is a perspective view of the mentioned support for holding foods;
Figure 7 is an elevational cross-section view of a first embodiment of the proposed steam cooking container; and
Figure 8 is an equivalent view of the steam cooking container according to a second embodiment comprising two coupled parts.

### Detailed Description of a Preferred Embodiment of the Invention

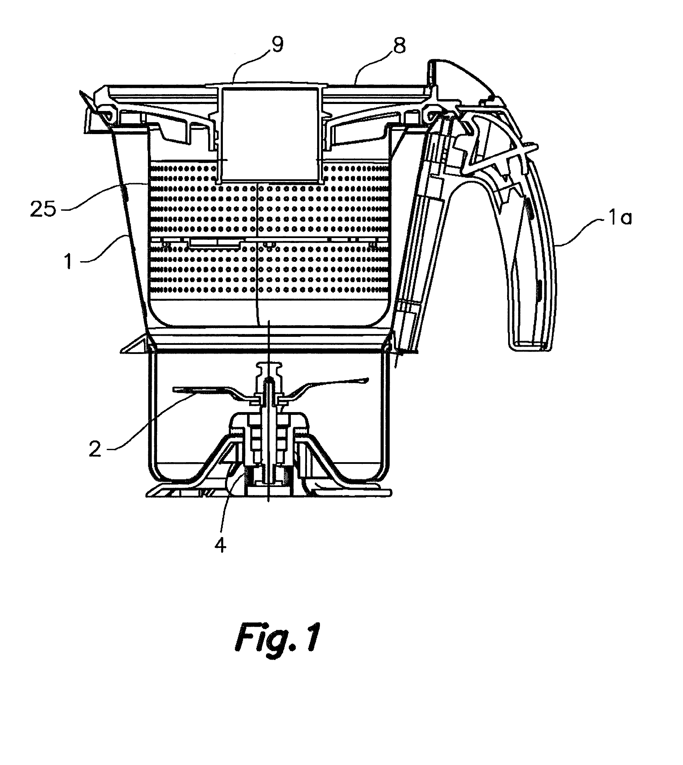

Figure 1 shows a container for a device 1 for preparing foods according to the described state of the art which is equipped with stirring or cutting means such as vanes or blades 2 linked to a driving core 4 envisaged for coupling to a drive shaft of a motor installed inside a casing of the device (not illustrated in this drawing). The container 1 has a handle 1a and internally houses a basket 25 comprising perforated bottom and walls for steam cooking foods. The container 1 is closed in the upper portion by a lid 8 having a central hole for introducing foods, which hole can be plugged by a cap 9.

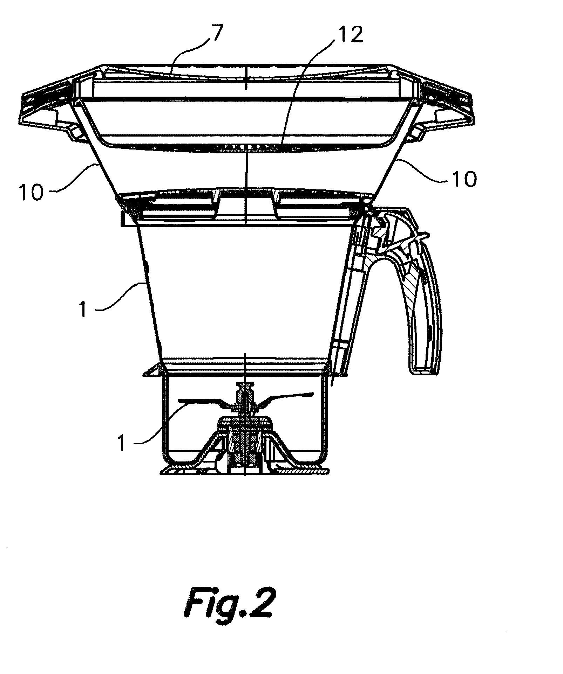

Figures 2, 4 and 7 show the present device for preparing foods according to a first embodiment including a first container 1, such as that described and a second steam cooking container 10 coupled to its mouth 3 by means of a gasket 5, basically comprising:
   - an opening 20 for the entry of steam and a support 13 for holding the foods to be steam cooked extending such that it is superimposed on said opening 20 for the entry of steam, demarcating above said support 13 a first cavity A for receiving foods and said support 13 having holes 14 for the passage of steam to said first cavity A; and
   - a second cavity B for condensate retention arranged below the opening 20, said second cavity B being demarcated by walls integral with a bottom in which said opening 20 for the entry of steam ending in a mouth 26 is defined.

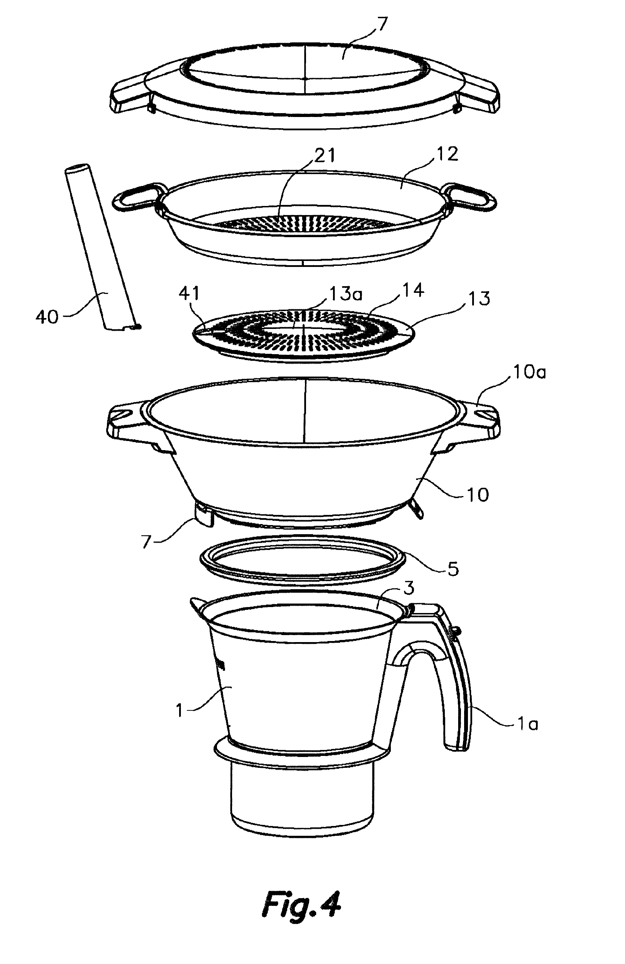

The mentioned steam cooking container 10 is closed in the upper portion by a lid 7 and can internally contain (Figures 2 and 4) a steam cooking tray 12 in a second level superimposed on the support 13 for the foods.

It can be seen that when the device is in a cooking position, the holes 14 of said support 13 for holding foods and said opening 20 for the entry of steam are not superimposed on, or not coinciding or not aligned with one another. The lower face of the support 13 for holding foods is in turn completely or partially concave, having a preferably blind central portion 13a which is superimposed on said opening 20 for the entry of steam, with said opening 20 for the entry of steam facing said support 13 for holding foods. It is inferred from the combination of said features that the condensed steam or moisture cannot be reintroduced into the first base container 1, being discharged along the slope of its concave surface towards the periphery and going into the second cavity B through holes 14.

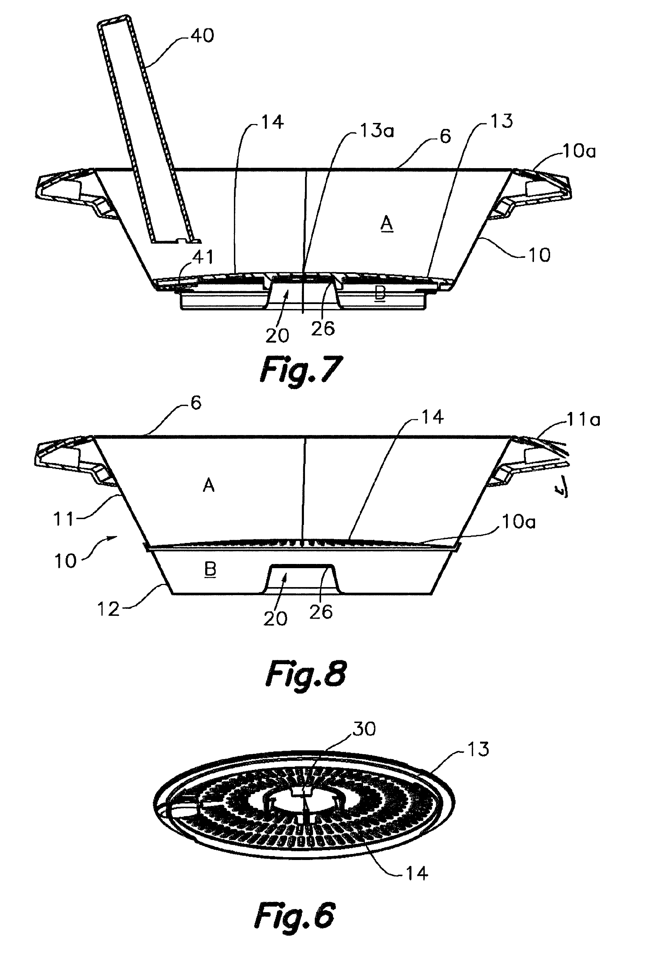

In a first solution (Figure 7), said first and second cavities A, B are configured from said cooking container 10, and said support 13 for holding foods is removable. To facilitate the removal of said support 13, there are envisaged coupling means, such as a hole 41 complementary of an end configuration of a handle 40 which allows attaching it to the support 13, such end configuration fitting in said hole, and allowing the removal of the support 13 and, eventually, the simultaneous removal of the steam cooked foods held thereon.

Holding projections or limbs 30 suitable for resting on the outer wall defining the opening 20 and providing clearance between said support 13 for holding foods and said opening 20 for the entry of steam have been envisaged, said projections 30 being attached to said support 13 or to a peripheral region of said opening 20 for the entry of steam.

In a second embodiment (Figure 8), the steam cooking container 10 is formed by two independent containers 11, 12 which can be coupled to and decoupled from one another, a first upper container 11 defining said first cavity A, the mentioned support 13 with holes 14 and a concave configuration in its lower face forming its bottom, and a second lower container 12 defining the mentioned second cavity B.

In the described embodiments, there is a single opening 20 for the entry of steam and it is located in a central area of said second cavity B for condensate retention. The container 12 configuring cavity B is sized so that said cavity B can sufficiently contain the condensate, without the condensate brimming over the opening 20 of a mouth 26, which would inappropriately redirect it into the container 3. To that end, said second cavity B for condensate retention will have a capacity comprised between 200 ml and 600 ml.

It is obvious that based on the constructive principle of this invention, two or more openings for the passage of steam could be envisaged provided that the support 13 which will extend above them has a wall without perforations in the facing area.

During operation, assuming that the container 1 is filled with liquid and after activating the stirring/mixing element 2 (where appropriate) and the heating member (not visible) for stirring/mixing and heating the liquid contained in the container, this liquid starts to produce steam which can only rise up and go through the opening 20, continue through the clearance provided by the projections 30 and then go through the holes 14 for the passage of steam of the support 13 for holding foods, steam cooking said foods. Simultaneously a steam condensate or moisture will be given off from the mentioned support 13 for holding foods and, after going through the same holes 14, will fall into the second cavity B for recovery and possible subsequent use.

With these premises, it will be seen that it is possible to use all the condensate and moisture generated while steam cooking which is collected in said second cavity B which, in the example of Figure 8 is a third container 12 for being applied in other culinary uses, since the condensate from cooking foods that will have been cooked at a higher level in the steam cooking container 10 is not redirected into the container 1 as occurred in other known devices. This liquid condensate retained in said second container 12 is actually the concentrated essences of the products being cooked; therefore, to cite only a few examples, in the case of fish, a fish broth could be obtained with it; in the case of artichokes, an artichoke concentrate will be obtained. This undoubtedly opens up new possibilities for culinary or recipe preparations.

Besides said use of the condensed steam and moisture generated while steam cooking, an additional advantage is obtained with the present device: since the cooking steam is not directly redirected into the first lower container 1 or pitcher, the water or liquid existing therein is kept pure or unaltered since no other flavor will be added or mixed therewith as occurs in the devices of this type already known and described.

As is well known in the state of the art, the container 1 is envisaged for being coupled to a body 22 or casing containing members for controlling the device itself, particularly a motor for driving the blades 2, heating means, a fan for cooling the components, etc. The mentioned casing will also have a user interface 23 in which switches, controls or push buttons as well as a display are integrated, all of which are also known.

## Claims

1. A device for preparing foods including steam cooking, comprising
- a container (1) with stirring/mixing means (2) arranged therein, provided with an upper opening (3);
- a heating device for heating said stirring/mixing container;
- driving means (4) which can be connected to said stirring/mixing means (2);
- a steam cooking container (10) which can be coupled to said upper opening (3) of the stirring/mixing container (1), the mentioned steam cooking container (10) being provided with holes (14) for the passage of steam, and with an upper access opening (6);
**characterized in that**:
- said steam cooking container (10) comprises at least one opening (20) for the entry of steam and a support (13) for holding the foods to be steam cooked located at least partially above said at least one opening (20) for the entry of steam, demarcating above said support (13) a first cavity (A) for receiving foods and said support (13) having holes (14) for the passage of steam to said first cavity (A);
- a lower section of the steam cooking container (10) is arranged below the mentioned at least one opening (20) for the entry of steam, and forms at least one second cavity (B) for condensate retention, said second cavity (B) being demarcated by walls integral with a bottom; and
- when the device is in a cooking position, the holes (14) of said support (13) for holding foods and said at least one opening (20) for the entry of steam are not superimposed on, or not coinciding or not aligned with one another.

2. The device according to claim 1, **characterized in that** said first and second cavities (A), (B) are configured from said cooking container (10) and said support (13) for holding foods is removable.

3. The device according to claim 1, **characterized in that** said steam cooking container is formed by two independent containers (11, 12) which can be coupled to and decoupled from one another, a first upper container (11) of said containers defining said first cavity (A) and the bottom thereof being the mentioned support (13) and a second lower container (12) of said containers defining said second cavity (B).

4. The device according to claim 1, 2 or 3, **characterized in that** the lower face of the support (13) for holding foods is completely or partially concave with a hole-free central portion which is superimposed on said opening (20) for the entry of steam.

5. The device according to claim 2, **characterized by** comprising holding projections (30) suitable for providing clearance between said support (13) for holding foods and said opening (20) for the entry of steam, said projections (30) being attached to said support (13) or to a peripheral region of said opening (20) for the entry of steam.

6. The device according to claim 2, **characterized in that** said removable support (13) for holding foods has coupling means (41) complementary to a removable handle (40).

7. The device according to any one of the preceding claims, **characterized in that** said at least one opening (20) for the entry of steam is facing said support (13) for holding foods .

8. The device according to any of the preceding claims, **characterized in that** said opening (20) for the entry of steam is one in number and is located in a central area of said second cavity (B) for condensate retention.

9. The device according to claim 1, **characterized in that** said second cavity (B) for condensate retention has a capacity comprised between 200 ml and 600 ml.

10. A steam cooking container applicable to a device for preparing foods according to claim 1 which can be coupled to a container for preparing foods, **characterized in that** it comprises:
a support (13) for holding foods to be steam cooked located at least partially above at least one opening (20) for the entry of steam, demarcating above said support (13) for holding foods a first cavity (A) for receiving foods and said support (13) for holding foods having holes (14) for the passage of steam to said first cavity;
- a lower section of the steam cooking container (10) is arranged below the mentioned at least one opening (20) for the entry of steam, and forms at least one second cavity (B) for condensate retention, said second cavity (B) being demarcated by walls integral with a bottom; and
- when the container is in a steam cooking position, the holes (14) of said support (13) for holding foods and said at least one opening (20) for the entry of steam are not superimposed on, or not coinciding or not aligned with one another.

11. The steam cooking container according to claim 10, **characterized in that** said first cavity (A) and said second cavity (B) are configured from a single cooking container (10) and said support (13) for holding foods is removable.

12. The steam cooking container according to claim 10, **characterized in that** said steam cooking container (10) is formed by two independent containers (11, 12) which can be coupled to and decoupled from one another, a first upper container (11) of said containers defining said first cavity (A) and the bottom thereof being the mentioned support (13) for holding foods with holes (14), and a second lower container (12) of said containers defining said second cavity (B).
